# EUROPÄISCHE PATENTSCHRIFT

(11) **EP 1 611 141 B1**
(45) Veröffentlichungstag und Bekanntmachung des Hinweises auf die Patenterteilung: **28.06.2006**
(21) Anmeldenummer: 04725022.0
(22) Anmeldetag: 01.04.2004
(51) Int. Cl.: C07F 7/18

(54) **ORGANOSILYLFUNKTIONALISIERTE PARTIKEL UND DEREN HERSTELLUNG**
ORGANOSILYL FUNCTIONALIZED PARTICLES AND THE PRODUCTION THEREOF
PARTICULES FONCTIONNALISEES ORGANOSILYLE ET LEUR PRODUCTION

(30) Priorität: 07.04.2003 DE 10315811
(43) Veröffentlichungstag der Anmeldung: 04.01.2006
(73) Patentinhaber: Consortium für elektrochemische Industrie GmbH, 81379 München (DE)
(72) Erfinder: BRIEHN, Christoph, 81369 München (DE); KÖHLER, Thomas, 84556 Kastl (DE); STANJEK, Volker, 81477 München (DE); WEIDNER, Richard, 84489 Burghausen (DE); SCHÄFER, Oliver, 84489 Burghausen (DE)
(74) Vertreter: Fritz, Helmut
(86) Internationale Anmeldenummer: PCT/EP2004/003450
(87) Internationale Veröffentlichungsnummer: WO 2004/089961

(56) Entgegenhaltungen:
- WO-A-00/22052
- WO-A-03/035252

## Beschreibung

Die Erfindung betrifft organosilylfunktionalisierte Partikel sowie Verfahren zu deren Herstellung unter Einsatz von Alkoxysilanen.

Unter dem Begriff organosilylfunktionalisierte Partikel versteht man dabei sämtliche Partikel mit entsprechender Funktionalisierung, deren Kerne aus Metalloxiden, Metallmischoxiden, Siliciumoxid, Silicium-Metall-Mischoxiden und/oder dreidimensional vernetzten Organosiloxanverbindung en (Organopolysiloxanharzen) bestehen.

Die Anwendung von herkömmlichen Organopolysiloxanharzen liegt bevorzugt im Einsatz als Bindemittel, hauptsächlich in Beschichtungen oder in elektrisch isolierenden Anwendungen. Verfahren zur Herstellung von Organopolysiloxanharzen sind seit längerer Zeit bekannt und beispielsweise in DE 198 57 348 A beschrieben. Organopolysiloxanharze werden durch Hydrolyse von Chlorsilanen oder Alkoxysilanen und anschließende Kondensation zu Polysiloxanen hergestellt. Die direkte Umsetzung von Chlorsilanen mit Wasser führt sehr leicht zu Gelbildung. Aus diesem Grund hat sich besonders die partielle Alkoxylierung vor der Hydrolyse bewährt.
Geht die Herstellung von Alkoxysilanen aus, so ist der Zusatz von Hydrolysekatalysatoren, im einfachsten Fall Salzsäure, erforderlich. Dennoch ist die Hydrolyse von Alkoxygruppen meist nicht quantitativ und auch die Kondensationsreaktion verläuft während der Harzherstellung nicht vollständig, so dass im Harz Anteile von Hydroxy- und Alkoxygruppen verbleiben. Deren Restgruppengehalt in den Primärharzen läßt sich reduzieren und das Molekulargewicht erhöhen, indem man nachgeschaltet Kondensationskatalysatoren wie z.B. Metallhydroxide anwendet.

Zur Herstellung von funktionalisierten Organopolysiloxanharzen werden beispielsweise in EP 759 457 A funktionalisierte Organosilylverbindungen mit Chlorsilanen oder Alkoxysilanbausteinen cohydrolysiert, wobei besonders bei der Hydrolyse ausgehend von Alkoxysilanen Hydroxygruppen im Organopolysiloxanharz verbleiben. Diese lassen sich selbst durch Kondensationskatalysatoren häufig nicht vollständig entfernen, was sich in einigen Fällen negativ auf die Lagerstabilität solcher Organopolysiloxanharze auswirken kann. So können sich zum Beispiel durch Kondensationsreaktionen der Hydroxygruppen die physikalischen Eigenschaften und unter Umständen auch die chemischen Eigenschaften der Produkte verändern.
Um dieses Problem zu lösen, können die Hydroxygruppen der Organopolysiloxanharze durch nachträgliche Reaktion mit geeigneten Reagenzien geschützt oder gezielt funktionalisiert werden.

Die Funktionalisierung von Metall-OH und/oder Si-OH-Gruppen tragenden Partikeln, insbesondere Organopolysiloxanharzen, wird vorzugsweise mit unsubstituierten Alkoxysilanen, wie z.B. Methyltrimethoxysilan, oder mit funktionalisierten und propylgespacerten Alkoxysilanen, wie z.B. Aminopropyltrimethoxysilan, durchgeführt, welche bei geeigneten Reaktionsbedingungen unter Verwendung von Katalysatoren reagieren, wie z.B in EP 1 249 470 A und EP 1 245 627 A beschrieben. Dabei werden in der Literatur verschiedene Katalysatoren wie Amine und Schwermetall-haltige Katalysatoren verwendet, deren Nachteile in EP 564 253 A erwähnt werden. Aufgrund ihrer gegenüber OH-Gruppen deutlich abgeschwächten Reaktivität können propyl-gespacerte Silane sowie nicht funktionalisierte Silane nicht ohne Katalysator-Zusatz mit OH-tragenden Partikeln umgesetzt werden.

Ein entscheidender Nachteil von propyl-gespacerten Silanen sowie nicht funktionalisierten Silanen liegt in der Tatsache, daß Monoalkoxy-funktionelle Silane in der Regel nicht für eine nachträgliche Funktionalisierung von Partikeln, insbesondere von Organopolysiloxanharzen verwendet werden können, da diese auf Grund ihrer geringen Reaktivität nicht oder nur extrem langsam reagieren. Dabei wäre aber gerade der Einsatz derartiger Monoalkoxy-funktioneller Silane für viele Anwendungen besonders wünschenswert, da man die entsprechen den Partikel durch eine derartige Funktionalisierung extrem leicht mit organischen Funktionen ausstatten kann. Derartige organische Funktionen dienen dazu, die Verträglichkeit zwischen Partikeln und einer organischen Matrix, in der die Partikel eingesetzt werden sollen, zu verbessern. Besonders günstig ist es dabei, wenn die organofunktionalisierten Partikel über diese Funktion mit der Matrix reagieren können und so chemisch in die Matrix eingebunden werden. Wünschenswert wären daher organosilylfunktionalisierte Partikel, die sich durch eine Silanisierung mit monoalkoxy-funktionellen Silanen mit einer erhöhten Reaktivität herstellen lassen.

Ein weiterer Nachteil der unsubstituierten Alkoxysilane sowie der propyl-gespacerten Silane ist im folgenden beschrieben: So können Partikel, die mit Di- und/oder Trialkoxysilanen funktionalisiert worden sind, in Gegenwart von Feuchtigkeit, z.B. Luftfeuchtigkeit, mit sich selbst oder mit anderen Alkoxysilylverbindungen Kondensationsreaktionen eingehen. Dies geschieht durch Hydrolyse der Alkoxysilylgruppen und anschliessender Kondensation unter Ausbildung von Si-O-Si-Bindungen. Auf diese Weise kann eine Härtung des entsprechenden Materials, z.B. beim Kontakt mit der Luftfeuchtigkeit, erreicht werden. Die oben genannten herkömmlichen Silane besitzen jedoch eine ungenügende Reaktivität, so dass diese Reaktion nicht bzw. nur sehr langsam und in Gegenwart von Katalysatoren stattfinden kann. Dabei müssen in der Regel Zinn-Katalysatoren eingesetzt werden, die unter toxikologischen Gesichtspunkten problematisch sind. Eine besonders geringe Reaktivität gegenüber Feuchtigkeit zeigen alkoxysilan-terminierte Systeme, wenn keine Methoxysilyl-Gruppen sondern die noch weniger reaktiven Ethoxysilyl-Gruppen zum Einsatz kommen. Wünschenswert wären daher organosilylfunktionalisierte Partikel, die sich durch eine Silanisierung mit Di- und/oder Trialkoxy-funktionellen Silanen mit einer erhöhten Reaktivität herstellen lassen.

In WO 03/18658 und WO 03/14226 kommen für die Silanterminierung von Polydimethylsiloxanen sowie organischen Polymeren funktionalisierte Alkoxysilane zum Einsatz, welche sich dadurch auszeichnen, daß sie Alkoxysilylgruppen enthalten, die durch einen Methylen-Spacer von einem Heteroatom getrennt sind und dadurch ein Austausch bzw. die Freisetzung von Alkoxygruppen erheblich beschleunigt wird. Die Reaktionsbeschleunigung ist dabei so erheblich, dass der Anteil an benötigten Katalysatoren deutlich verringert oder sogar auf einen Katalysatorzusatz verzichtet werden kann.

In WO 00/22052 sind mit Organosilylresten funktionalisierte Metalloxidpartikel beschrieben, insbesondere die Herstellung aus Kieselsäure mit Acryl- oder Methacryloxypropyltrimethoxysilan. Hierzu ist der Zusatz einer starken Säure erforderlich.

In DATABASE CHEMABS [online] CHEMICAL ABSTRACTS SERVICE, COLUMBUS, OHIO, US; 1985, WU, XUQIN ET AL:"Reactions between Silanes and fumed silica surface" XP002287114 gefunden in STN Database no. 1988;131899 ist die Reaktion der Oberfläche von in der Dampfphase hergestelltem feinteiligem Siliciumdioxid mit Methacryloxymethyl-triethoxysilan beschrieben.

Gegenstand der Erfindung ist ein Verfahren zur Herstellung von organosilylfunktionalisierten Partikeln (PS) der allgemeinen Formel I,

**PR**(O_{(u+t)/2})[O_{u/2}(R²O)ᵥ₋ᵤ R¹₃₋ᵥ SiCR³₂-A]ₛ(O_{1/2}R⁴)ₜ (I),

wobei
- **PR**: einen Partikelrest bedeutet, der Atome, die ausgewählt werden aus Metallatomen und Siliciumatomen, und Sauerstoffatome umfasst,
- **A**: eine Gruppe ausgewählt aus R⁵O-, R⁵₂N-, (R⁵O)₂OP-, R⁵₂NC(O)NR⁵-, R⁶OC(O)NR⁵-, OCN-,
- **R**^{**1**}**,**: **R**^{**3**} Wasserstoff, einen gegebenenfalls halogensubstituierten Kohlenwasserstoffrest mit 1-18 Kohlenstoffatomen,
- **R**^{**2**}: einen Alkylrest mit 1-6 Kohlenstoffatomen oder einen ω-Oxaalkyl-alkylrest mit insgesamt 2-10 Kohlenstoffatomen,
- **R**^{**4**}: Wasserstoff, einen gegebenenfalls substituierten einwertigen Kohlenwasserstoffrest mit 1-18 Kohlenstoffatomen,
- **R**^{**5**}: Wasserstoff, einen gegebenenfalls halogen-, OR²-, NR²₂- oder epoxyfunktionellen Kohlenwasserstoffrest mit 1-18 Kohlenstoffatomen,
- **R**^{**6**}: einen gegebenenfalls halogen-, OR²-, NR²₂- oder epoxyfunktionellen Kohlenwasserstoffrest mit 1-18 Kohlenstoffatomen,
- **s**: einen Wert von > 0,
- **t**: einen Wert von grösser oder gleich 0,
- **u**: Werte 1, 2 oder 3 und
- **v**: Werte 1, 2 oder 3 bedeuten,
bei dem ein Partikel (POH) mit freien Funktionen, die ausgewählt werden aus Metall-OH und Si-OH mit Silan der allgemeinen Formel II,

(R²O)ᵥ R¹₃₋ᵥ Si-CR³₂-A (II),

umgesetzt wird, wobei **A, R**^{**1**}**, R**^{**2**}**, R**^{**3**} und **v** die bei der allgemeinen Formel I angegebenen Bedeutungen aufweisen.

Die organosilylfunktionalisierten Partikel (PS) sind mit hochreaktiven methylengespacerten Silanen funktionalisierte Partikel.

Die organosilylfunktionalisierten Partikel (PS) können mit geringem oder insbesondere ohne Katalysator-Zusatz durch Umsetzung mit Silanen hergestellt werden. Neben den methoxysubstituierten Silanen besitzen die entsprechenden ethoxysubstituierten Silane eine hinreichende Reaktivität, dass in diesem Fall Ethanol anstelle von Methanol als Spaltprodukt frei wird.

In diesen organosilylfunktionalisierten Partikeln (PS), insbesondere organosilylfunktionalisierten Organopolysiloxanharzen, tragen die immobilisierten Silane wahlweise keine oder mehrere Alkoxysilan-Gruppen. Die Alkoxysilan-tragenden Partikel (PS) sind in der Lage, bei Feuchtigkeitszutritt schnell zu vernetzen.

Aufgrund einer durch die Struktur der eingesetzten methylengespacerten Alkoxysilane vorgegebenen hohen Reaktivität sind auch monoalkoxy-funktionalisierte Silane zur Funktionalisierung von eingesetzten Partikeln (POH) geeignet, insbesondere von Organopolysiloxanharzen. So lassen sich die Eigenschaften der Partikel (POH) durch die eingebrachten funktionellen Gruppen hervorragend modifizieren.

Die durch Umsetzung der Partikel (POH) mit di- und trialkoxyfunktionalisierten Silanen erhaltenen Partikel (PS) weisen aufgrund einer durch die Struktur der eingesetzen methylengespacerten Alkoxysilane vorgegebenen hohen Reaktivität bei Feuchtigkeitszutritt oder Zugabe einer geeignet funktionalisierten Verbindung eine hohe Vernetzungs- bzw.

Reaktionsgeschwindigkeit auf und sind unter Feuchtigkeitsausschluss lagerstabil.

Die organosilylfunktionalisierten Partikel (PS) besitzen bevorzugt einen mittleren Durchmesser von 1 nm bis 100 µm, besonders bevorzugt von 10 nm bis 1000 nm. Bei einem besonders bevorzugten Partikeltyp (PS) handelt es sich um Organopolysiloxanharze.

Als Metallatome in den Partikeln (PS) sind Aluminium, Titan, Zirkon und Eisen bevorzugt. Siliciumatome sind in den Partikeln (PS) besonders bevorzugt.

In der Gruppe **A** bedeutet **R**^{**5**} bevorzugt Wasserstoff, oder einen gegebenenfalls halogen-, OR²-, NR²₂- oder epoxyfunktionellen cyclischen, linearen oder verzweigten C₁- bis C₁₈-Alkyl- oder Alkenylrest oder einen C₆- bis C₁₈- Arylrest. Insbesondere bedeutet **R**^{**5**} einen C₁- bis C₆-Alkylrest oder einen Phenylrest. Beispiele für organofunktionelle Gruppen **A** sind Aminomethyl-, *N*-Phenylaminomethyl-, *N*-Butylaminomethyl-, *N*-Ethylaminomethyl, *N*-Cyclohexylaminomethyl-, *N,N*-Dibutylaminomethyl *N,N-*Diethylaminomethyl, Methoxymethyl-, Ethoxymethyl-, *N-*Morpholinomethyl-, Isocyanatomethyl, Alkylcarbamatomethyl, Dialkylphosphonsäureester-methyl-, *N-*(2-Aminoethyl)-aminomethyl- und Glycidoxymethyl-Gruppen.

**R**^{**6**} bedeutet vorzugsweise einen gegebenenfalls halogen-, OR²-, NR²₂- oder epoxyfunktionellen cyclischen, linearen oder verzweigten C₁- bis C₁₈-Alkyl- oder Alkenylrest oder einen C₆₋bis C₁₈- Arylrest, insbesondere C₁- bis C₆-Alkyl- oder Phenylrest.

Der Kohlenwasserstoffrest **R**^{**1**} ist vorzugsweise ein gegebenenfalls halogensubstituierter Alkyl-, Cycloalkyl-, Alkenyl- oder Arylrest, insbesondere C₁- bis C₆-Alkyl- oder Phenylrest. Methyl- oder Ethylgruppen sind besonders bevorzugt.

Der Kohlenwasserstoffrest **R**^{**3**} ist vorzugsweise ein linearer oder verzweigter C₁- bis C₆-Alkylrest. Methyl- oder Ethylgruppen sind besonders bevorzugt.

Die organosilylfunktionalisierten Partikel (PS) sind vorzugsweise bei 20°C fest.

Als Partikel (POH) können sämtliche Metalloxid- und Metallmischoxid-Partikel (z.B. Aluminiumoxide wie Korund, Aluminiummischoxide mit anderen Metallen und/oder Silicium, Titanoxide, Zirkonoxide, Eisenoxide etc.), Siliciumoxid-Partikel (z.B. kolloidale Kieselsäure) oder Silicium-OxidVerbindungen, bei denen einige Valenzen des Siliciums mit organischen Resten versehen sind, eingesetzt werden. Diese Partikel (POH) zeichnen sich dadurch aus, dass sie auf ihrer Oberfläche über Metall- und/oder Siliciumhydroxid Funktionen verfügen, über die eine Organosilylfunktionalisierung erfolgen kann.

Besonders bevorzugte organosilylfunktionalisierte Partikel (PS) sind organosilylfunktionalisierte Organopolysiloxanharzpartikel der allgemeinen Formel III,

(R⁷₃SiO_{1/2})ₖ(R⁷₂SiO_{2/2})ₗ(R⁷SiO_{3/2})ₘ(SiO_{4/2})ₙ [O_{u/2}(R²O)ᵥ₋ᵤ R¹₃₋ᵥ SiCR³₂-A]ₛ(O_{1/2}R⁴)ₜ (III),

wobei
- **R**^{**7**}: Wasserstoff, einen gegebenenfalls halogensubstituierten Kohlenwasserstoffrest mit 1-18 Kohlenstoffatomen,
- **k**: einen Wert von grösser oder gleich 0,
- **l**: einen Wert von grösser oder gleich 0,
- **m**: einen Wert von grösser oder gleich 0,
- **n**: einen Wert von grösser oder gleich 0,
die Summe aus **k + l + m + n** einen Wert von 1 ergibt, und **R**^{**1**}**, R**^{**2**}**, R**^{**3**}**, R**^{**4**}**, u, v, s** und **t** die bei der allgemeinen Formel I angegebenen Bedeutungen aufweisen.

Vorzugsweise bedeutet **R**^{**7**} einen gegebenenfalls halogensubstituierten Alkyl-, Cycloalkyl-, Alkenyl- oder Arylrest mit 1-18 Kohlenstoffatomen, insbesondere C₁- bis C₆₋Alkyl- oder Phenylrest. Methyl-, Ethyl- und Phenylrest sind besonders bevorzugt.

Die organosilylfunktionalisierten Organopolysiloxanharzpartikel (PS) der allgemeinen Formel III werden bevorzugt hergestellt durch Umsetzung eines Organopolysiloxanharzes (POH) der allgemeinen Formel IV,

(R⁷₃SiO_{1/2})ₖ(R⁷₂SiO_{2/2})ₗ(R⁷SiO_{3/2})ₘ(SiO_{4/2})ₙ(O_{1/2}R⁴)ᵣ (IV),

mit einem organofunktionalisierten Silan der allgemeinen Formel II, wobei **R**^{**7**}**, k, l, m, n** und **r** die bei den allgemeinen Formeln II und III angegebenen Bedeutungen aufweisen, mit der Massgabe, dass mindestens ein **R**^{**4**} im Organopolysiloxanharz ein Wasserstoffatom bedeutet.

Die organofunktionalisierten Organopolysiloxanharze (PS) der allgemeinen Formel III sowie die zu deren Herstellung eingesetzten Organopolysiloxanharze (POH) der allgemeinen Formel IV können aus mehreren unterschiedlichen Einheiten, nämlich R⁷₃SiO_{1/2}- (M), R⁷₂SiO_{2/2}- (D), R⁷SiO_{3/2}- (T) und SiO_{4/2}-Gruppen (Q) bestehen, wobei die Molprozente der enthaltenen Einheiten durch die Indizes **k, l, m, n, r, s** und **t** bezeichnet werden. Die Summe aus **k + l + m + n** hat einen Wert von 1. Bevorzugt ist für die Einheiten **r** ein Wert von 0,001 bis 1,5 bezogen auf die Summe von **k, l, m** und **p**. Beim Siloxanharz (PS) der allgemeinen Formel III muß **s** > 0 sein.

Beispiele für die bevorzugt einsetzbaren Organopolysiloxanharze (POH) sind Harze mit einer durchschnittlichen Zusammensetzung der allgemeinen Formel IV, mit **R**^{**7**} und **R**^{**4**} unabhängig voneinander gleich Wasserstoff, ein gegebenenfalls substituierter einwertiger Kohlenwasserstoffrest und mit Werten für k von 0,0 - 0,6, für **l** von 0,0 - 0,95, für **m** von 0,0 - 1,0 und für n von 0,0 - 0,6, wobei die Summe aus **k + l + m + n** einen Wert von 1 ergeben muss, mit der Massgabe, dass mindestens ein **R**^{**4**} im Organopolysiloxanharz ein Wasserstoffatom bedeutet. Für die Einheiten **r** ist ein Wert von 0,001 bis 1,5 bezogen auf die Summe von **k, l, m** und **p** bevorzugt.

Weitere Beispiele für die bevorzugt einsetzbaren Organopolysiloxanharze (POH) sind Harze mit einer durchschnittlichen Zusammensetzung der allgemeinen Formel IV mit **R**^{**7**} bzw. **R**^{**4**} unabhängig voneinander gleich Wasserstoff, ein gegebenenfalls halogensubstituierter Alkyl-, Cycloalkyl-, Alkenyl- oder Arylrest mit 1 - 18 Kohlenstoffatomen, und mit Werten für **k** von 0,0 - 0,6, für 1 von 0,0 - 0,95, für **m** von 0,0 - 1,0 und für **n** von 0,0 - 0,6, wobei die Summe aus **k** + **l + m** + **n** einen Wert von 1 ergeben muss, mit der Massgabe, dass mindestens ein **R**^{**4**} im Organopolysiloxanharzpartikel ein Wasserstoffatom bedeutet. Für die Einheiten r ist ein Wert von 0,01 bis 1,0 bezogen auf die Summe von **k, l, m** und **p** bevorzugt.

Weitere Beispiele für die bevorzugt einsetzbaren Organopolysiloxanharze (POH) sind Harze mit einer durchschnittlichen Zusammensetzung der allgemeinen Formel IV mit **R**^{**7**} unabhängig voneinander gleich Alkyl-, Alkenyl- oder Arylrest mit 1 - 18 Kohlenstoffatomen, und mit Werten für **k** von 0,0 - 0,15, für 1 von 0,0 - 0,7, für m von 0,2 - 1,0 und für n von 0,0 - 0,2, wobei die Summe aus **k + l + m + n** einen Wert von 1 ergeben muss. Für die Einheiten **r** ist ein Wert von 0,02 bis 0,9 bezogen auf die Summe von **k, l, m** und p und für **R**^{**4**} gleich oder unabhängig von einander Wasserstoff, Alkylreste mit 1 - 4 Kohlenstoffatomen bevorzugt.

Weitere Beispiele für die bevorzugt einsetzbaren Organopolysiloxanharze (POH) sind Harze mit einer durchschnittlichen Zusammensetzung der allgemeinen Formel IV mit **R**^{**7**} unabhängig voneinander gleich Alkyl-, Alkenyl- oder Arylrest mit 1 - 18 Kohlenstoffatomen, und mit Werten für k von 0,1 - 0,7, für 1 von 0,0 - 0,1, für **m** von 0,0 - 0,5 und für **n** von 0,1 - 0,7, wobei die Summe aus **k + l + m + n** einen Wert von 1 ergeben muss mit der Massgabe, dass mindestens ein **R**^{**4**} im Organopolysiloxanharzpartikel ein Wasserstoffatom bedeutet. Für die Einheiten r ist ein Wert von 0,02 bis 0,30 bezogen auf die Summe von **k, l, m** und **p** und für **R**^{**4**} gleich oder unabhängig von einander Wasserstoff, Alkylreste mit 1 - 4 Kohlenstoffatomen bevorzugt.

Ebenfalls besonders bevorzugte organosilylfunktionalisierte Partikel (PS) sind organosilylfunktionalisierte kolloidale Kieselsäuren. Diese werden bevorzugt hergestellt durch Umsetzung einer herkömmlichen kolloidalen Kieselsäure mit einem organofunktionalisierten Silan der allgemeinen Formel II. Dabei kann die kolloidale Kieselsäure sowohl als wäßriges Kieselsol als auch als Kieselsol in einem organischen Lösungsmitteln vorliegen. Die Umsetzung mit dem Silan der allgemeinen Formel II erfolgt bevorzugt durch einfaches Vermischen der einzelnen Komponenten. Auf Grund der hohen Reaktivität der Silane der allgemeinen Formel II sind für die Silanisierung der kolloidalen Kieselsäurepartikel in der Regel weder Katalysatoren noch deutlich erhöhte Temperaturen erforderlich.

Bei der Verwendung organofunktioneller Alkoxy-Silane der allgemeinen Formel II werden gegenüber den entsprechenden Propyl-gespacerten Verbindungen, wie z.B. H₂N(CH₂)₃Si(OCH₃)₃, aufgrund einer durch die Struktur der eingesetzen Alkoxysilane vorgegebenen hohen Reaktivität verkürzte Reaktionszeiten bei gleichen Reaktionsbedingungen erreicht, d.h. ein Produkt (PS) kann mit kürzeren Reaktionszeiten, bei geringeren Temperaturen, oder aber ohne die Zugabe von Katalysatoren erhalten werden.

Zur Herstellung der organosilylfunktionalisierten Partikel (PS) der allgemeinen Formel I ist eine Organosilanfunktionalisierung der Partikel mit Silanen der allgemeinen Formel II bevorzugt. Eine derartige Reaktion ist einfach und schnell durchzuführen und liefert keine Nebenprodukte.

Bevorzugt wird die Organosilanfunktionalisierung bei 0 °C bis 150 °C, besonders bevorzugt bei 20 °C bis 80 °C durchgeführt. Das Verfahren kann dabei sowohl unter Einbeziehung von Lösungsmitteln durchgeführt werden oder aber auch ohne die Verwendung von Lösungsmitteln in geeigneten Reaktoren. Dabei wird gegebenenfalls unter Vakuum oder unter Überdruck oder bei Normaldruck (0,1 Mpa) gearbeitet. Der bei der Reaktion entstehende Alkohol kann entweder im Produkt verbleiben oder/und durch Anlegen von Vakuum bzw. Temperaturerhöhung aus dem Reaktionsgemisch entfernt werden.

Bei der Verwendung von Lösungsmitteln sind inerte, insbesondere aprotische Lösungsmittel wie aliphatische Kohlenwasserstoffe, wie z.B. Heptan oder Decan, und aromatische Kohlenwasserstoffe, wie z.B. Toluol oder Xylol, bevorzugt. Ebenfalls können Ether wie THF, Diethylether oder MTBE verwendet werden. Lösungsmittel oder Lösungsmittelgemische mit einem Siedepunkt bzw. Siedebereich von bis zu 120° C bei 0,1 MPa sind bevorzugt.

Bei der Umsetzung der Partikel (POH) mit den organofunktionellen Silanen können Katalysatoren, insbesondere organische Aminoverbindungen als basische Katalysatoren, eingesetzt werden. Beispiele sind Aminopropyltrimethoxysilan, Aminomethyltrimethoxysilan, Aminomethyl-methyldimethoxysilan, N-(2-Aminoethyl)-aminopropyltrimethoxysilan, Triethylamin, Tributylamin, 1,4-Diazabicyclo[2,2,2]octan, N,N-Bis-(N,N-dimethyl-2-aminoethyl)-methylamin, N,N-Dimethylcyclohexylamin, N,N-Dimethylphenylamin, N-Ethylmorpholinin, etc. Des weiteren können auch saure Katalysatoren wie Benzoylchlorid, Essigsäure, Trifluoressigsäure, anorganische Säuren, wie z.B. Salzsäure, eingesetzt werden. Diese Katalysatoren werden bevorzugt in Konzentrationen von 0,01-10 Gew.-% eingesetzt. Die verschiedenen Katalysatoren können sowohl in reiner Form als auch als Mischungen verschiedener Katalysatoren eingesetzt werden. Die Katalysatoren sind bevorzugt zinnfrei.

Werden bei der Herstellung von organosilylfunktionalisierten Partikel (PS) der allgemeinen Formel I Silane der allgemeinen Formel II, bei denen A die Bedeutung R⁵₂N-, R⁶OC(O)NR⁶-, R⁵₂NC(O)NR⁵-, OCN- hat, eingesetzt, so können diese Silane ebenfalls die Rolle des Katalysators übernehmen, so dass eine Zugabe von weiteren Katalysatoren unnötig sein kann.

In einer bevorzugten Variante für Partikel (PS) der allgemeinen Formel I ist **v** = 1 und **u** = 1, wobei man Partikel (PS) erhält, deren eingeführte organofunktionelle Gruppen gegebenenfalls nach bekannten Verfahren weiter umgesetzt werden können. Die für die Herstellung dieser Partikel (PS) eingesetzten Monoalkoxysilane der allgemeinen Formel II (v = 1) sind dabei reaktiv genug, dass sie auch unter Einsatz von wenig oder bevorzugt ohne Katalysator mit den hydroxy-funktionalisiert en Partikeln (POH) reagieren. Hier liegt ein entscheidender Vorteil gegenüber dem Einsatz von herkömmlichen propylgespacerten Silanen entsprechend des Standes der Technik. Werden für die Herstellung der organosilylfunktionalisierten Partikel (PS) organofunktionelle Silane der allgemeinen Formel II, wobei v = 1 ist, gegenüber der Anzahl von SiOH- und/oder Metall-OH Gruppen im Unterschuss eingesetzt, können gegebenenfalls restliche Si-OH und/oder Metall-OH Gruppen im Produkt verbleiben. Gegebenenfalls können diese dann mit anderen Silanen nach bekannten Verfahren umgesetzt werden.

In einer weiteren bevorzugten Variante für organosilylfunktionalisierten Partikel (PS) der allgemeinen Formel I ist **v** = 2 oder 3. Dabei ist **u** bevorzugt kleiner als **v.** So erhält man silanvernetzende Partikel (PS), welche gegebenenfalls unter Einwirkung von Wasser (z.B. Feuchtigkeit) oder anderen OH-Gruppen tragenden Verbindungen entweder mit sich selbst oder anderen OH-Gruppen tragenden Verbindungen zu höhermolekularen Teilchen oder zu Partikeln (PS) mit höherem Vernetzungsgrad vernetzt werden können. Dabei weisen die organosilylfunktionalisierten Partikel (PS) der allgemeinen Formel I aufgrund der durch die Struktur der eingesetzten Alkoxysilane vorgegebenen hohen Reaktivität eine erhöhte Reaktivität der Alkoxysilan-Gruppen gegenüber Wasser oder mit OH-Gruppen funktionalisierten Verbindungen auf, was zu erhöhten Vernetzungs- bzw. Reaktionsgeschwindigkeiten führt. Insbesondere im Vergleich zu herkömmlichen Propyl-gespacerten Silanen ist die Vernetzungs- bzw. Reaktionszeit drastisch verkürzt. Werden zur Herstellung der organosilylfunktionalisierten Partikel (PS) als organofunktionelle Silane der allgemeinen Formel II Ethoxysilane (**R**^{**2**} = Ethyl) eingesetzt, ergibt sich als besonderer Vorteil, dass bei Herstellung und Vernetzung kein Methanol freigesetzt wird.

Bei der Herstellung der besonders bevorzugten organosilylfunktionalisierten Organopolysiloxanharze (PS) der allgemeinen Formel III sind verschiedene Herstellungsverfahren möglich. Insbesondere ist dabei die oben beschriebene Silanisierung mit Silanen der allgemeinen Formel II bevorzugt.

Alternativ können die Organopolysiloxanharze (PS) auch über eine Cohydrolyse von Silanen der allgemeinen Formel II mit weiteren Harzbausteinen durchgeführt werden. Ein weiteres Verfahren besteht in einer Äquilibrierung von Organopolysiloxanharzen mit Silanen der allgemeinen Formel II. Sowohl die Cohydrolyse als auch die Äquilibrierung kann dabei in Gegenwart von Katalysatoren durchgeführt werden. Die prinzipiellen Verfahren der Cohydrolyse und Äquilibrierung zur Herstellung von Harzen sind in der Literatur vielfach beschrieben.

Die organosilylfunktionalisierten Partikel (PS) können für alle Zwecke eingesetzt werden, für die auch bisher organosilylfunktionalisierte Partikel, insbesondere organosilylfunktionalisierte Organopolysiloxanharze, verwendet werden, beispielsweise als Bindemittel oder Füllstoffe zur Herstellung von Überzügen (Beschichtungen) oder Lacken (Pulverlacken).

Alle vorstehenden Symbole der vorstehenden Formeln weisen ihre Bedeutungen jeweils unabhängig voneinander auf.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20 °C.

Die in den Beispielen eingesetzten Harze (POH) lassen sich entsprechend der in US 5548053 A, EP 640 109 A und DE 19857348 A beschriebenen Verfahren herstellen. Die monodispersen funktionalisierten Nanopartikel wurden analog EP 744 432 A hergestellt.
Das eingesetzte OH-Gruppen freie MQ-Harz 803 ist unter dem Namen MQ-Harz Pulver 803 bei Wacker-Chemie GmbH, München, erhältlich.

### Beispiel 1:

Eine Lösung von 5,00 g eines MQ-Harzes (Harz der Zusammensetzung (Me₃SiO_{1/2})_{0,4}(SiO_{4/2})_{0,6}(O_{1/2}R⁴)_{0,2} mit R⁴ unabhängig voneinander Wasserstoff bzw. Ethylrest, einem mittleren Molekulargewicht Mw von 1400 g/mol und einem OH-Gruppengehalt von 3,4 Gew.-%) in 10 ml trockenem Toluol wurde zu einer Lösung von 1,19 g Aminomethyl-dimethylmethoxysilan in 5 ml trockenem Toluol getropft und bei Raumtemperatur für 6 Stunden gerührt. Nach Abdestillieren des Lösungsmittels erhielt man das organosilylfunktionalisierte Organopolysiloxanharz als farblosen Feststoff. ²⁹Si-NMR-Spektroskopie zeigte, dass sämtliche OH-Gruppen des MQ-Harzes mit Aminomethyldimethylsilyl-Gruppen funktionalisiert waren und dass kein Aminomethyl-dimethylmethoxysilan mehr nachweisbar war.

### Beispiel 2:

Analog Beispiel 1 wurde das MQ-Harz mit 2,17 g Cyclohexylaminomethyl-methyldimethoxysilan umgesetzt. Nach Abdestillieren des Lösungsmittels erhält man das organosilylfunktionalisierte Organopolysiloxanharz als farblosen Feststoff. ²⁹Si-NMR Spektroskopie zeigte, dass alle OH-Gruppen des MQ-Harzes mit Cyclohexylaminomethyl-silylGruppen funktionalisiert waren und dass kein Cyclohexylaminomethyl-methyldimethoxysilan mehr nachweisbar war. Des weiteren konnte im ²⁹Si-NMR gezeigt werden, dass ein Anteil der Methoxy-Gruppen des eingesetzten Silans im organosilylfunktionalisierten Organopolysiloxanharz verbleibt.

### Beispiel 3:

Analog Beispiel 1 wurde das MQ-Harz mit 2,47 g Di(n-butyl)-aminomethyl-methyldimethoxysilan umgesetzt. Nach Abdestillieren des Lösungsmittels erhält man das organosilylfunktionalisierte Organopolysiloxanharz als farblosen Feststoff. ²⁹Si-NMR Spektroskopie zeigte, dass sämtliche OH-Gruppen des MQ-Harzes mit Di(n-butyl)aminomethylsilyl-Gruppen funktionalisiert waren und dass kein Di(n-butyl)aminomethyl-methyldimethoxysilan mehr nachweisbar war. Des weiteren konnte im ²⁹Si-NMR. gezeigt werden, dass ein Anteil der Methoxy-Gruppen des eingesetzten Silans im organosilylfunktionalisierten Organopolysiloxanharz verbleibt.

### Beispiel 4:

Analog Beispiel 1 wurde das MQ-Harz mit 2,23 g Morpholinomethyl-trimethoxysilan umgesetzt. Nach Abdestillieren des Lösungsmittels erhält man das organosilylfunktionalisierte Organopolysiloxanharz als farblosen Feststoff. ²⁹Si-NMR Spektroskopie zeigte, dass sämtliche OH-Gruppen des MQ-Harzes mit Morpholinomethylsilyl-Gruppen funktionalisiert waren und dass kein Morpholinomethyl-trimethoxysilan mehr nachweisbar war. Des weiteren konnte im ²⁹Si-NMR gezeigt werden, dass ein Anteil der Methoxy-Gruppen des eingesetzten Silans im organosilylfunktionalisierten Organopolysiloxanharz verbleibt.

### Beispiel 5:

Eine Lösung von 5,00 g eines Phenyl-Harzes (Harz der Zusammensetzung (Me₂SiO_{2/2})_{0,1}(MeSiO_{3/2})_{0,4}(PhSiO_{3/2})_{0,5} (O_{1/2}R⁴)_{0,4} mit R⁴ unabhängig voneinander Wasserstoff bzw. Ethylrest, einem mittleren Molekulargewicht Mw von 1600 g/mol und einem OH-Gruppengehalt von 4,8 Gew.-%) in 10 ml trockenem Toluol wurde zu einer Lösung von 3,12 g Morpholinomethyl-trimethoxysilan in 5 ml trockenem Toluol getropft und bei Raumtemperatur für 6 Stunden gerührt. Nach Abdestillieren des Lösungsmittels erhält man das organosilylfunktionalisierte Organopolysiloxanharz als farblosen Feststoff. ²⁹Si-NMR Spektroskopie zeigte, dass sämtliche OH-Gruppen des Phenyl-Harzes mit Morpholinomethylsilyl-Gruppen funktionalisiert waren und dass kein Morpholinomethyl-trimethoxysilan mehr nachweisbar war. Des weiteren konnte im ²⁹Si-NMR gezeigt werden, dass ein Anteil der Methoxy-Gruppen des eingesetzten Silans im organosilylfunktionalisierten Organopolysiloxanharz verbleibt.

### Beispiel 6:

Eine Lösung von 5,00 g eines Methyl-Harzes (Harz der Zusammensetzung (MeSiO_{3/2})_{1,0}(O_{1/2}R⁴)_{0,3} mit R⁴ unabhängig voneinander Wasserstoff bzw. Ethylrest, einem mittleren Molekulargewicht Mw von 1600 g/mol und einem OH-Gruppengehalt von 2,9 Gew.-%) in 10 ml trockenem Toluol wurde zu einer Lösung von 1,9 g Morpholinomethyl-trimethoxysilan in 5 ml trockenem Toluol getropft und bei Raumtemperatur für 6 Stunden gerührt. Nach Abdestillieren des Lösungsmittels erhält man das organosilylfunktionalisierte Organopolysiloxanharz als farblosen Feststoff. ²⁹Si-NMR Spektroskopie zeigte, dass sämtliche OH-Gruppen des Methyl-Harzes mit Morpholinomethylsilyl-Gruppen funktionalisiert waren und dass kein Morpholinomethyl-trimethoxysilan mehr nachweisbar war. Des weiteren konnte im ²⁹Si-NMR gezeigt werden, dass ein Anteil der Methoxy-Gruppen des eingesetzten Silans im organosilylfunktionalisierten Organopolysiloxanharz verbleibt.

### Beispiel 7:

Das in Beispiel 6 hergestellte organosilylfunktionalisierte Organopolysiloxanharz wurde in 5 ml trockenem Toluol gelöst, in einer Dicke von 120 Mikrometer auf eine Glasplatte aufgerakelt, und bei einer relativen Luftfeuchtigkeit von 52% bei Raumtemperatur für 48 h stehen gelassen. Bestimmung der Bleistifthärte in Anlehnung an die ISO 15184 ergab eine Härte von 3H.

### Beispiel 8:

Analog Beispiel 6 wurde das Methylharz mit 1,56 g Aminomethyl-triethoxysilan umgesetzt. Nach Abdestillieren des Lösungsmittels erhält man das organosilylfunktionalisierte Organopolysiloxanharz als farblosen Feststoff. ²⁹Si-NMR Spektroskopie zeigte, dass sämtliche OH-Gruppen des Methyl-Harzes mit Aminomethylsilyl-Gruppen funktionalisiert waren und dass kein Aminomethyl-triethoxysilan mehr nachweisbar war. Des weiteren konnte im ²⁹Si-NMR gezeigt werden, dass ein Anteil der Ethoxy-Gruppen des eingesetzten Silans im organosilylfunktionalisierten Organopolysiloxanharz verbleibt.

### Beispiel 9:

Analog Beispiel 7 wurden die in Beispiel 8 und Vergleichsbeispiel 2 hergestellten organosilylfunktionalisierten Organopolysiloxanharze sowie das in Beispiel 6 eingesetzte unfunktionalisierte Methylharz in Toluol gelöst und auf einer Glasplatte aufgerakelt und ausgehärtet. Aus dem in Vergleichsbeispiel 2 hergestellten organosilylfunktionalisierten Methylharz ließ sich keine charakterisierbare Beschichtung herstellen. Bestimmung der Bleistifthärte in Anlehnung an die ISO 15184 ergab (a) eine Härte von 4H für die Beschichtung des mit Aminomethyl-triethoxysilan funktionalisierten Methylharzes (aus Beispiel 10) und (b) eine Härte von 2B für die Beschichtung des unfunktionalisierten Methylharzes.

### Beispiel 10.

Zu 10,00 g eines SiO₂-Organosols (IPA-ST der Firma Nissan Chemicals, 30 Gew.-% SiO₂, 12 nm) werden innerhalb von 10 min 0.31 g Methoxymethyl-trimethoxysilan getropft und das Gemisch für 16 h bei Raumtemperatur gerührt. Man erhält eine transparente Dispersion. ²⁹Si-NMR Spektroskopie zeigte, dass das eingesetzte Silan mit dem kolloidalen SiO₂ reagiert hat und dass ein Teil der Methoxy-Gruppen des eingesetzten Silans als Methoxysilyl-Gruppen in der Dispersion verbleibt.

### Vergleichsbeispiel 1:

Analog Beispiel.1 wurde das MQ-Harz mit 1,47 g Aminopropyldimethylmethoxysilan umgesetzt. ²⁹Si-NMR-Spektroskopie zeigte, daß im Gegensatz zu Beispiel 1 nach 24 Stunden Reaktionszeit die Umsetzung nicht vollständig war und in der Mischung noch nicht umgesetztes Aminopropyldimethylmethoxysilan vorlag.

## Patentansprüche

1. Verfahren zur Herstellung von organosilylfunktionalisierten Partikeln (PS) der allgemeinen Formel I,
**PR**(O_{(u+t)/2})[O_{u/2}(R²O)ᵥ₋ᵤ R¹₃₋ᵥ SiCR³₂-A]ₛ(O_{1/2}R⁴)ₜ (I),
wobei
**PR** einen Partikelrest bedeutet, der Atome, die ausgewählt werden aus Metallatomen und Siliciumatomen, und Sauerstoffatome umfasst,
**A** eine Gruppe ausgewählt aus R⁵O-, R⁵₂N-, (R⁵O)₂OP-, R⁵₂NC(O)NR⁵-, R⁶OC(O)NR⁵-, OCN-,
**R**^{**1**}**, R**^{**3**} Wasserstoff, einen gegebenenfalls halogensubstituierten Kohlenwasserstoffrest mit 1-18 Kohlenstoffatomen,
**R**^{**2**} einen Alkylrest mit 1-6 Kohlenstoffatomen oder einen ω-Oxaalkyl-alkylrest mit insgesamt 2-10 Kohlenstoffatomen,
**R**^{**4**} Wasserstoff, einen gegebenenfalls substituierten einwertigen Kohlenwasserstoffrest mit 1-18 Kohlenstoffatomen,
**R**^{**5**} Wasserstoff, einen gegebenenfalls halogen-, OR²-, NR²₂- oder epoxyfunktionellen Kohlenwasserstoffrest mit 1-18 Kohlenstoffatomen,
**R**^{**6**} einen gegebenenfalls halogen-, OR²-, NR²₂- oder epoxyfunktionellen Kohlenwasserstoffrest mit 1-18 Kohlenstoffatomen,
**s** einen Wert von > 0,
**t** einen Wert von grösser oder gleich 0,
**u** Werte 1, 2 oder 3 und
**v** Werte 1, 2 oder 3 bedeuten,
bei dem ein Partikel (POH) mit freien Funktionen, die ausgewählt werden aus Metall-OH und Si-OH mit Silan der allgemeinen Formel II,
(R²O)ᵥ R¹₃₋ᵥ Si-CR³₂-A (II),
umgesetzt wird, wobei **A, R**^{**1**}**, R**^{**2**}**, R**^{**3**} und **v** die bei der allgemeinen Formel I angegebenen Bedeutungen aufweisen, wobei alle Symbole der vorstehenden Formeln ihre Bedeutungen jeweils unabhängig voneinander aufweisen.

2. Verfahren nach Anspruch 1, bei denen die Atome ausgewählt werden aus Silicium, Aluminium, Titan, Zirkon und Eisen.

3. Verfahren nach Anspruch 1 oder 2, welche Organopolysiloxanharze (PS) der allgemeinen Formel III sind,
(R⁷₃SiO_{1/2})ₖ(R⁷₂SiO_{2/2})ₗ(R⁷SiO_{3/2})ₘ(SiO_{4/2})ₙ [O_{u/2}(R²O)ᵥ₋ᵤ R¹₃₋ᵥ SiCR³₂-A]ₛ(O_{1/2}R⁴)ₜ (III),
wobei
**R**^{**7**} Wasserstoff, einen gegebenenfalls halogensubstituierten Kohlenwasserstoffrest mit 1-18 Kohlenstoffatomen,
**k** einen Wert von grösser oder gleich 0,
**l** einen Wert von grösser oder gleich 0,
**m** einen Wert von grösser oder gleich 0,
**n** einen Wert von grösser oder gleich 0,
die Summe aus **k + l + m + n** einen Wert von 1 ergibt, und **R**^{**1**}**, R**^{**2**}**, R**^{**3**}**, R**^{**4**}**, u, v, s und t** die bei der allgemeinen Formel I angegebenen Bedeutungen aufweisen,
wobei alle symbole der vorstehenden Formel ihre Bedentungen jeweils unabhängig von einander aufweisen.

4. Verfahren nach Anspruch 1 bis 3, bei denen **R**^{**5**} einen C₁- bis C₆-Alkylrest oder einen Phenylrest bedeutet.

5. Verfahren nach Anspruch 1 bis 4, bei denen **R**^{**6**} einen C₁- bis C₆-Alkylrest oder einen Phenylrest bedeutet.

6. Verfahren nach Anspruch 1 bis 5, bei denen **R**^{**1**} eine Methyl- oder Ethylgruppe ist.

7. Verfahren nach Anspruch 1 bis 6, bei denen **R**^{**3**} einen C₁- bis C₆-Alkylrest oder einen Phenylrest bedeutet.

## Claims

1. Process for preparing organosilyl-functionalized particles (PS) of the general formula I,
**PR** (O_{(u+t)/2}) [O_{u/2}(R²O)ᵥ₋ᵤR¹₃₋ᵥSiCR³₂-A]ₛ(O_{1/2}R⁴)ₜ (I)
where
**PR** is a particle radical comprising atoms selected from metal atoms and silicon atoms, and oxygen atoms,
**A** is a group selected from R⁵O-, R⁵₂N-, (R⁵O)₂OP-, R⁵₂NC(O)NR⁵-, R⁶OC(O)NR⁵-, and OCN-,
**R**^{**1**} and **R**^{**3**} are each hydrogen or an optionally halogen-substituted hydrocarbon radical having 1-18 carbon atoms,
**R**^{**2**} is an alkyl radical having 1-6 carbon atoms or an ω-oxaalkyl-alkyl radical having in total 2-10 carbon atoms,
**R**^{**4**} is hydrogen or an optionally substituted monovalent hydrocarbon radical having 1-18 carbon atoms,
**R**^{**5**} is hydrogen or an optionally halogen-, OR²-, NR²₂- or epoxy-functional hydrocarbon radical having 1-18 carbon atoms,
**R**^{**6**} is an optionally halogen, OR²-, NR²₂- or epoxy-functional hydrocarbon radical having 1-18 carbon atoms,
**s** has a value of > 0,
**t** has a value of greater than or equal to 0,
**u** has values 1, 2 or 3 and
**v** has values 1, 2 or 3,
wherein a particle (POH) having free functions selected from metal-OH and Si-OH is reacted with silane of the general formula II,
(R²O)ᵥR¹₃₋ᵥSi-CR³₂-A (II)
where **A, R**^{**1**}**, R**^{**2**}**, R**^{**3**}**,** and **v** are as defined for the general formula I, all of the symbols in the above formulae having their definitions in each case independently of one another.

2. Process according to Claim 1, wherein the atoms are selected from silicon, aluminium, titanium, zirconium, and iron.

3. Process according to Claim 1 or 2 which are organopolysiloxane resins (PS) of the general formula III,
(R⁷₃SiO_{1/2})ₖ(R⁷₂SiO_{2/2})ₗ(R⁷SiO_{3/2})ₘ(SiO_{4/2})ₙ [O_{u/2}(R²O)ᵥ₋ᵤR¹₃₋ᵥSiCR³₂-A]ₛ(O_{1/2}R⁴)t (III)
where
**R**^{**7**} is hydrogen or an optionally halogen-substituted hydrocarbon radical having 1-18 carbon atoms,
**k** has a value greater than or equal to 0,
**l** has a value greater than or equal to 0,
**m** has a value greater than or equal to 0,
**n** has a value greater than or equal to 0,
the sum of **k + l + m + n** produces a value of 1, and **R**^{**1**}**, R**^{**2**}**, R**^{**3**}**, R**^{**4**}**, u, v, s,** and **t** are as defined for the general formula I, all of the symbols in the above formulae having their definitions in each case independently of one another.

4. Process according to Claim 1 to 3, wherein **R**^{**5**} is a C₁ to C₆ alkyl radical or a phenyl radical.

5. Process according to Claim 1 to 4, wherein **R**^{**6**} is a C₁ to C₆ alkyl radical or a phenyl radical.

6. Process according to Claim 1 to 5, wherein **R**^{**1**} is a methyl or ethyl group.

7. Process according to Claim 1 to 6, wherein **R**^{**3**} is a C₁ to C₆ alkyl radical or a phenyl radical.

## Revendications

1. Procédé de préparation de particules (PS) à fonctionnalité organosilyle de la formule générale I,
**PR(O**_{**(u+t)/2**}**)[O**_{**u/2**}**(R**^{**2**}**O)**_{**v-u**} **R**^{**1**}_{**3-v**} **SiCR**^{**3**}_{**2**}**-A]**_{**s**}**(O**_{**1/2**}**R**^{**4**}**)**_{**t**} **(I),**
dans laquelle
PR représente un radical de particule qui comprend des atomes choisis parmi des atomes métalliques et des atomes de silicium, et des atomes d'oxygène,
A représente un groupe choisi parmi R⁵O-, R⁵₂N-, (R⁵O)₂OP-, R⁵₂NC(O)NR⁵-, R⁶OC(O)NR⁵-, OCN-,
R¹, R³ représentent de l'hydrogène ou un radical hydrocarboné éventuellement substitué par de l'halogène et comportant de 1 à 18 atomes de carbone,
R² représente un radical alkyle comportant de 1 à 6 atomes de carbone ou un radical ω-oxaalkylalkyle comportant au total de 2 à 10 atomes de carbone,
R⁴ représente de l'hydrogène ou un radical hydrocarboné monovalent éventuellement substitué comportant de 1 à 18 atomes de carbone,
R⁵ représente de l'hydrogène, un radical hydrocarboné éventuellement substitué par de l'halogène, OR²-, NR²₂- ou à fonctionnalité époxy, comportant de 1 à 18 atomes de carbone,
R⁶ représente un radical hydrocarboné éventuellement substitué par de l'halogène, OR²-, NR²₂- ou à fonctionnalité époxy, comportant de 1 à 18 atomes de carbone,
s a une valeur > 0,
t a une valeur supérieure ou égale à 0,
u a une valeur de 1, 2 ou 3 et
v a une valeur de 1, 2 ou 3,
dans lequel on fait réagir une particule (POH) possédant des fonctions libres, choisies parmi métal-OH et Si-OH, avec un silane de la formule générale II
**(R**^{**2**}**O)**_{**v**} **R**^{**1**}_{**3-v**} **Si-CR**^{**3**}_{**2**}**-A** **(II),**
où A, R¹, R², R³ et v présentent les significations indiquées pour la formule générale I, tous les symboles des formules qui précèdent ayant à chaque fois leurs significations indépendamment les uns des autres.

2. Procédé suivant la revendication 1, dans lequel les atomes sont choisis parmi le silicium, l'aluminium, le titane, le zirconium et le fer.

3. Procédé suivant la revendication 1 ou 2, lesquelles résines (PS) d'organopolysiloxane sont de la formule générale III
**(R**^{**7**}_{**3**}**SiO**_{**1/2**}**)**_{**k**}**(R**^{**7**}_{**2**}**SiO**_{**2/2**}**)**_{**l**}**(R**^{**7**}**SiO**_{**3/2**}**)**_{**m**}**(SiO**_{**4/2**}**)**_{**n**} **[O**_{**u/2**}**(R**^{**2**}**O)**_{**v-u**} **R**^{**1**}_{**3-v**} **SiCR**^{**3**}_{**2**}**-A]**_{**s**}**(O**_{**1/2**}**R**^{**4**}**)**_{**t**} **(III),**
dans laquelle
R⁷ représente de l'hydrogène ou un radical hydrocarboné éventuellement substitué par de l'halogène et comportant de 1 à 18 atomes de carbone,
k a une valeur supérieure ou égale à 0,
l a une valeur supérieure ou égale à 0,
m a une valeur supérieure ou égale à 0,
n a une valeur supérieure ou égale à 0,
la somme k + l + m + n donnant une valeur de 1, et R¹, R², R³, R⁴, u, v, s et t présentant les mêmes significations que celles indiquées pour la formule générale I, tous les symboles des formules qui précèdent ayant à chaque fois leurs significations indépendamment les uns des autres.

4. Procédé suivant les revendications 1 à 3, dans lequel R⁵ représente un radical alkyle en C₁ à C₆ ou un radical phényle.

5. Procédé suivant les revendications 1 à 4, dans lequel R⁶ représente un radical alkyle en C₁ à C₆ ou un radical phényle.

6. Procédé suivant les revendications 1 à 5, dans lequel R¹ représente un radical méthyle ou éthyle.

7. Procédé suivant les revendications 1 à 6, dans lequel R³ représente un radical alkyle en C₁ à C₆ ou un radical phényle.
